# EUROPÄISCHE PATENTSCHRIFT

(11) **EP 2 706 420 B1**
(45) Veröffentlichungstag und Bekanntmachung des Hinweises auf die Patenterteilung: **18.03.2015**
(21) Anmeldenummer: 12183119.2
(22) Anmeldetag: 05.09.2012
(51) Int. Cl.: G05B 19/042, G05B 15/02

(54) **Verfahren zum Betreiben eines Automatisierungsgerätes**
Method for operating an automation device
Procédé destiné au fonctionnement d'un appareil d'automatisation

(43) Veröffentlichungstag der Anmeldung: 12.03.2014
(73) Patentinhaber: Siemens Aktiengesellschaft, 80333 München (DE)
(72) Erfinder: Rottmann, Norbert, 76829 Landau (DE)

(56) Entgegenhaltungen:
- EP-A1- 2 420 908

## Beschreibung

Die Erfindung betrifft ein Verfahren zum Betreiben eines Automatisierungsgerätes, welches ein CPU-Modul zur Verarbeitung eines Steuerprogramms und ein über einen Bus verbundenes Quellenmodul zur Versorgung von Senkenmodulen des Automatisierungsgerätes mit elektrischer Energie aufweist, wobei dem Automatisierungsgerät zugängliche, den Betrieb des Automatisierungsgerätes beeinflussende Größen erfasst werden. Darüber hinaus betrifft die Erfindung ein Automatisierungsgerät zur Durchführung des Verfahrens.

Ein derartiges Verfahren sowie ein derartiges Automatisierungsgerät sind z. B. aus dem Siemens-Katalog "ST PCS 7 - Juni 2012", Prozessleitsystem SIMATIC PCS 7 bekannt. Die den Betrieb bzw. das Verhalten des Automatisierungsgerätes oder des Automatisierungssystems beeinflussenden Größen werden erfasst, im CPU-Modul aufbereitet sowie hinterlegt und einer übergeordneten Station für eine Auswertung bereitgestellt. Unter solchen zyklisch, zu vorgegeben Zeiten oder beim Auftreten bestimmter Ereignisse zu erfassenden Einflussgrößen werden beispielsweise die Umgebungstemperatur, die Temperatur der Leiterplatte des Quellenmoduls, die Zulufttemperatur, die Luftfeuchtigkeit, die Einbaulage der Module bzw. Baugruppen im Schaltschrank (horizontaler oder vertikaler Einbau), die elektromagnetische Strahlung, die Einbrüche der Versorgungsspannung oder der Auslastungsgrad des oder der Quellenmodule verstanden. In Abhängigkeit des Ergebnisses dieser Auswertung werden ggf. geeignete Maßnahmen eingeleitet, um störende Auswirkungen der Einflussgrößen zu verringern. Nachteilig ist, dass das CPU-Modul die erfassten Einflussgrößen bzw. "Umweltdaten" zyklisch oder zu vorgegebenen Zeiten abrufen und im Hinblick auf die Hinterlegung geeignet aufbereiten muss, was eine zusätzliche Belastung des CPU-Moduls über die Verarbeitung seines Steuerprogramms zur Steuerung eines technischen Prozesses hinaus bedeutet.

Aus der EP 2 420 908 A1 ist ein Verfahren zum Betrieb eines Automatisierungsgerätes gemäß Oberbegriff des Anspruchs 1 bekannt.

Der Erfindung liegt daher die Aufgabe zugrunde, ein Verfahren der eingangs genannten Art anzugeben, das eine Entlastung des CPU-Moduls im Rahmen der Aufbereitung der Einflussgrößen ermöglicht. Darüber hinaus ist ein Automatisierungsgerät zur Durchführung des Verfahrens zu schaffen.

Diese Aufgabe wird im Hinblick auf das Verfahren durch die im kennzeichnenden Teil des Anspruch 1 angegebenen, bezüglich des Automatisierungsgerätes durch die im kennzeichnenden Teil des Anspruchs 3 angegebenen Maßnahmen gelöst.

Die Erfindung geht von der Idee aus, in einem ohnehin stets vorhandenen Quellenmodul (Stromversorgung) des Automatisierungsgerätes die Einflussgrößen zu hinterlegen bzw. abzuspeichern, wobei die Hinterlegung derart verwirklicht ist, dass das CPU-Modul auf die Einflussgrößen bzw. Umweltdaten einfach zugreifen kann. Dazu ist vorgesehen, im Quellenmodul konsistente Blöcke mit jeweils n Umweltdaten abzuspeichern und jederzeit für einen CPU-Zugriff bereitzuhalten, wobei ein zu lesender Datensatz zum Lesezeitpunkt die aktuellsten Umweltdatenblöcke umfasst und wobei ferner das Abspeichern der Umweltdaten von einem CPU-Lesezugriff nicht beeinflusst wird. Die Anzahl der Umweltdatenblöcke, die im Lesedatensatz bereitgestellt werden, richtet sich nach der im Rahmen eines Lesezugriffs durch das CPU-Modul angegebenen Datensatzlänge. Aufgrund dessen, dass dem CPU-Modul jederzeit alle in dem Quellenmodul gespeicherten Umweltdatenblöcke lesbar bereitgestellt werden, wird eine umfangreiche Fehlerdiagnose im Bedarfsfall ermöglicht. Nach einem Lesezugriff können die Umweltdaten ausgewertet und auf mögliche Ursachen von Ausfällen geschlossen werden. Eine zu hohe Temperatur in einem Schaltschrank kann beispielsweise auf einen Ausfall eines Lüfters oder einer sonstigen Kühlung hindeuten, wobei ohne eingeleitete Gegenmaßnahmen größere Folgeschäden auftreten können.

In einer Ausgestaltung der Erfindung ist vorgesehen, mittels eines Software-Bausteins des CPU-Moduls eine Schnittstelle zu einem Bedien- und Beobachtungsgerät bereitzustellen, wodurch eine anwendergerechte Schnittstelle zu den Umweltdaten verwirklicht wird.

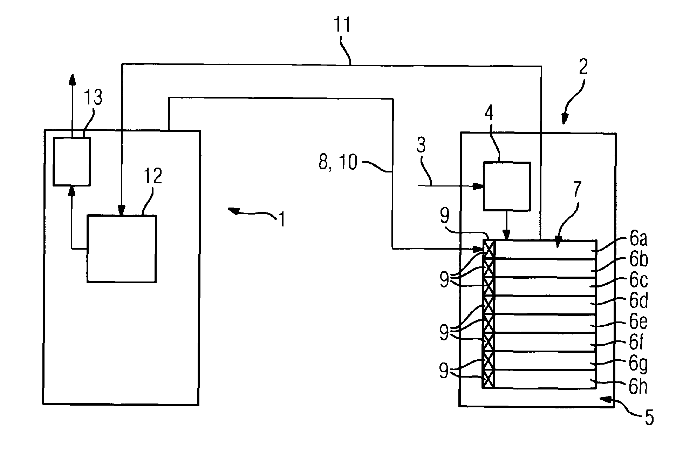

Die Erfindung wird nachfolgend anhand eines Ausführungsbeispiels unter Bezugnahme auf die einzige Figur der Zeichnung näher erläutert. Die Figur der Zeichnung zeigt in stark vereinfachter Darstellung Bestandteile eines Automatisierungsgerätes.

Das Automatisierungsgerät weist ein CPU-Modul 1, ein Quellenmodul 2 und eine Vielzahl von hier nicht dargstellten Senkenmodulen auf. Die Module 1, 2 bzw. die Baugruppen tauschen über eine geeignete Busverbindung Informationen aus und sind an Versorgungsleitungen angeschlossen, wobei das Quellenmodul 1 über diese Versorgungsleitungen die Senkenmodule mit elektrischer Energie versorgt. Die Senkenmodule sind beispielsweise in Form von Reglermodulen oder Ein-/Ausgabemodulen ausgebildet, wobei ferner weitere Automatisierungskomponenten zur Steuerung einer technischen Anlage vorgesehen sind, z. B. Automatisierungskomponenten in Form von Sensoren, Aktoren und/oder Softwarekomponenten.

Mittels geeigneter Erfassungseinheiten und/oder Sensoren werden den Betrieb des Automatisierungsgerätes beeinflussende Größen erfasst und dem Quellenmodul 2 über Verbindungen 3 übermittelt, wobei eine Speicherverwaltungs-Software 4 diese Einflussgrößen aufbereitet in einem Speicher 5 des Quellenmoduls 2 hinterlegt. Dabei ist vorgesehen, die Einflussgrößen in einen mehrere Datenblöcke 6a bis 6h aufweisenden Datensatz 7 abzuspeichern, wobei die Software 4 diesem Datensatz 7 eine vorgegebene Datensatznummer 8 zuordnet, mittels der das CPU-Modul 1 auf den Datensatz 7 lesend zugreifen kann. Die Datenblöcke 6a bis 6h, in denen im Hinblick auf die zeitliche Erfassung zusammengehörige Einflussgrößen hinterlegt sind (konsistente Datenblöcke) werden mit entsprechenden Zeitstempeln 9 versehen, wobei unabhängig von diesen Zeitstempeln 9 die aktuellen bzw. die neuesten Einflussgrößen stets in dem Datenblock 6a gespeichert und die älteren Daten dann über die Datenblöcke 6b bis 6h lesbar sind. Für den Fall, dass der Zeitstempel 9 nicht aussagekräftig ist, beispielsweise weil die Uhrzeit im Quellenmodul 2 von der des CPU-Moduls 1 abweicht oder die Uhrzeit im Quellenmodul zwischen zwei Speichervorgängen umgestellt wird, reicht alleine die Auswertung der Hinterlegungsreihenfolge um im CPU-Modul 1 zu erkennen, welche Einflussgrößen zum Lesezeitpunkt die aktuellsten sind. Falls die Kapazität des Speichers 5 erschöpft ist, werden die ältesten Einflussgrößen eines Datenblockes, z. B. eines 64 Byte-Datenblocks, von neu zu hinterlegenden Einflussgrößen überschrieben.

Ein Lesezugriff auf die Einflussgrößen wird in der Art und Weise bewerkstelligt, indem das CPU-Modul 1 auf den Datensatz 7 im Rahmen einer Leseanforderung "Einflussgrößen lesen" mittels der Datensatznummer 8 und einer Datensatzlänge 10 zugreift, welche die Anzahl der zu lesenden Datenblöcke 6a bis 6h repräsentiert, wobei die Datenblöcke 6a bis 6h stets mit dem Datenblock 6a beginnend bzw. immer ab dem Datenblock 6a gelesen werden. Beispielsweise werden mit der Datensatznummer 8 und einem Wert "vier" der Datensatzlänge 10 die ersten vier Datenblöcke 6a bis 6d, mit der Datensatznummer 8 und einem Wert "sechs" der Datensatzlänge 10 die ersten sechs Datenblöcke 6a bis 6f ausgelesen und über eine Datenleitung 11 dem CPU-Modul 1 übermittelt.

Es kann nun vorkommen, dass das CPU-Modul 1 lediglich auf die Datenblöcke 6a, 6b und 6c lesend zugreift, das Quellenmodul 2 allerdings seit dem letzten Lesevorgang im Speicher 5 die Datenblöcke 6a bis 6g neu beschrieben hat. Das bedeutet, dass dem CPU-Modul 1 die in den Datenblöcken 6d und 6g hinterlegten Einflussgrößen für eine weitere Verarbeitung nicht zu Verfügung stehen. Es muss daher sichergestellt sein, dass stets mindestens die Anzahl Datenblöcke gelesen werden, die zwischen zwei Lesevorgängen beschrieben wurden. Sicherheitshalber werden einige Blöcke mehr gelesen, damit keine Daten bzw. Einflussgrößen verloren gehen. Über einen fortlaufenden Zähler, der von der Speicherverwaltungs-Software 4 in den einzelnen Datenblöcken 6a bis 6f mit abgespeichert wird, kann in einem Software-Baustein 13 des CPU-Moduls 1 nach dem Lesen erkannt werden, ob Datenblöcke des aktuellen Lesevorgangs bereits im vorherigen Lesevorgang gelesenen wurden oder nicht. Anhand dieses fortlaufenden Zählers kann auch festgestellt werden, ob zu wenige Datenblöcke gelesen wurden, also Datenblöcke verloren gegangen sind.

Um den Verwaltungsaufwand zu verringern, kann im Rahmen eines CPU-Lesezugriffs natürlich auch stets auf die Inhalte aller Datenblöcke 6a bis 6g zugegriffen werden. Der Lesezugriff ist ausschließlich durch die Kommunikationsverbindung 8, 10 begrenzt.

Die ausgelesenen Einflussgrößen hinterlegt das CPU-Modul 1 in einem Speicher 12 des CPU-Moduls 1. Die im Speicher 12 hinterlegten Einflussgrößen stehen einer übergeordneten Einheit zur Auswertung bereit, wobei mittels des Software-Bausteins 13 des CPU-Moduls 1 eine anwendergerechte Schnittstelle zu einem Bedien- und Beobachtungsgerät für einen Zugriff auf die Einflussgrößen verwirklicht wird.

Die Erfindung lässt sich damit wie folgt zusammenfassen:
Ein Verfahren zum Betreiben eines Automatisierungsgerätes, welches ein CPU-Modul 1 zur Verarbeitung eines Steuerprogramms und ein über einen Bus verbundenes Quellenmodul 2 zur Versorgung von Senkenmodulen des Automatisierungsgerätes mit elektrischer Energie aufweist, wobei dem Automatisierungsgerät zugängliche, den Betrieb des Automatisierungsgerätes beeinflussende Größen erfasst werden, zeichnet sich dadurch aus, dass die Einflussgrößen in einem Speicher 5 des Quellenmoduls 2 in Form eines mehrere Datenblöcke 6a bis 6h aufweisenden Datensatzes 7 hinterlegt werden, wobei mittels des Quellenmoduls 2 jedem Datenblock 6a bis 6h ein Zeitstempel 9 zugewiesen wird und wobei mittels des CPU-Moduls 1 auf den Datensatz 7 mit einer vorgegebenen Datensatznummer 8 und einer Datensatzlänge 10 lesend zugegriffen wird, welche die Anzahl der zu lesenden Datenblöcke 6a bis 6h repräsentiert.

## Patentansprüche

1. Verfahren zum Betreiben eines Automatisierungsgerätes, welches ein CPU-Modul (1) zur Verarbeitung eines Steuerprogramms und ein über einen Bus verbundenes Quellenmodul (2) zur Versorgung von Senkenmodulen des Automatisierungsgerätes mit elektrischer Energie aufweist, wobei dem Automatisierungsgerät zugängliche, den Betrieb des Automatisierungsgerätes beeinflussende Größen erfasst werden, **dadurch gekennzeichnet, dass** die Einflussgrößen in einem Speicher (5) des Quellenmoduls (2) in Form eines mehrere Datenblöcke (6a bis 6h) aufweisenden Datensatzes (7) hinterlegt werden, wobei mittels des Quellenmoduls (2) jedem Datenblock (6a bis 6h) ein Zeitstempel (9) zugewiesen wird und wobei mittels des CPU-Moduls (1) auf den Datensatz (7) mit einer vorgegebenen Datensatznummer (8) und einer Datensatzlänge (10) lesend zugegriffen wird, welche die Anzahl der zu lesenden Datenblöcke (6a bis 6h) repräsentiert.

2. Verfahren nach Anspruch 1, **dadurch gekennzeichnet, dass** mittels eines Software-Bausteins (13) des CPU-Moduls (1) eine Schnittstelle zu einem Bedien- und Beobachtungsgerät bereitgestellt wird.

3. Automatisierungsgerät mit
- einem CPU-Modul (1) zur Verarbeitung eines Steuerprogramms,
- einem über einen Bus verbundenen Quellenmodul (2) zur Versorgung von Senkenmodulen des Automatisierungsgerätes mit elektrischer Energie, und
- Mitteln zum Erfassen von den Betrieb des Automatisierungsgerätes beeinflussenden Größen,
**dadurch gekennzeichnet, dass**
- das Quellenmodul (2) dazu ausgebildet ist, die Einflussgrößen in einem Speicher (5) des Quellenmoduls (2) in Form eines mehrere Datenblöcke (6a bis 6h) aufweisenden Datensatzes (7) zu hinterlegen und jedem Datenblock (6a bis 6h) einen Zeitstempel (9) zuzuweisen, und
- das CPU-Modul (1) dazu ausgebildet ist, auf den Datensatz (7) mit einer vorgegebenen Datensatznummer (8) und einer Datensatzlänge (10) lesend zuzugreifen, welche die Anzahl der zu lesenden Datenblöcke (6a bis 6h) repräsentiert.

4. Automatisierungsgerät nach Anspruch 3, **dadurch gekennzeichnet, dass** das CPU-Modul (1) einen Software-Baustein (13) zum Bereitstellen einer Schnittstelle zu einem Bedien- und Beobachtungsgerät ein Software-Baustein (13) aufweist.

## Claims

1. Method for operating an automation device having a CPU module (1) for processing a control program and a source module (2) which is connected via a bus and is intended to supply sink modules of the automation device with electrical energy, variables which are available to the automation device and influence the operation of the automation device being recorded, **characterized in that** the influencing variables are stored in a memory (5) of the source module (2) in the form of a data record (7) having a plurality of data blocks (6a to 6h), a time stamp (9) being allocated to each data block (6a to 6h) using the source module (2), and the CPU module (1) being used to have read access to the data record (7) having a predefined data record number (8) and a data record length (10) which represents the number of data blocks (6a to 6h) to be read.

2. Method according to Claim 1, **characterized in that** an interface to an operating and monitoring device is provided by means of a software module (13) of the CPU module (1).

3. Automation device having
- a CPU module (1) for processing a control program,
- a source module (2) which is connected via a bus and is intended to supply sink modules of the automation device with electrical energy, and
- means for recording variables which influence the operation of the automation device,
**characterized in that**
- the source module (2) is designed to store the influencing variables in a memory (5) of the source module (2) in the form of a data record (7) having a plurality of data blocks (6a to 6h) and to allocate a time stamp (9) to each data block (6a to 6h), and
- the CPU module (1) is designed to have read access to the data record (7) having a predefined data record number (8) and a data record length (10) which represents the number of data blocks (6a to 6h) to be read.

4. Automation device according to Claim 3, **characterized in that** the CPU module (1) has a software module (13) for providing an interface to an operating and monitoring device.

## Revendications

1. Procédé pour faire fonctionner un appareil d'automatisation, qui a un module (1) CPU de traitement d'un programme de commande et un module (2) source relié par un bus pour alimenter en énergie électrique les modules de réception de l'appareil d'automatisation, dans lequel on détecte des grandeurs accessibles à l'appareil d'automatisation et influençant le fonctionnement de l'appareil d'automatisation, **caractérisé en ce qu'**on met les grandeurs ayant de l'influence dans une mémoire ( 5 ) du module ( 2 ) source sous la forme d'un jeu ( 7 ) de données ayant plusieurs blocs ( 6a à 6h ) de données, on affecte au moyen du module (2) source un horodatage ( 9 ) à chaque bloc ( 6a à 6h ) de données et dans lequel on accède en lecture au moyen du module ( 1 ) CPU au jeu de données ayant un numéro ( 8 ) de jeu de données prévu à l'avance et une longueur (10 ) de jeu de données, qui représente le nombre des blocs ( 6a à 6h ) de données à lire.

2. Procédé suivant la revendication 1, **caractérisé en ce qu'**on procure au moyen d'un module (13) de logiciel du module ( 1 ) CPU une interface avec un appareil de commande et de contrôle.

3. Appareil d'automatisation comprenant
- un module ( 1 ) CPU de traitement d'un programme de commande,
- un module ( 2 ) source relié par l'intermédiaire d'un bus pour alimenter en énergie électrique des modules de réception de l'appareil d'automatisation, et
- des moyens de détection de grandeurs ayant de l'influence sur le fonctionnement de l'appareil d'automatisation, **caractérisé en ce que**
- le module ( 2 ) source est constitué de manière à émettre les grandeurs ayant de l'influence dans une mémoire (5) du module ( 2 ) source sous la forme d'un jeu ( 7 ) de données ayant plusieurs blocs ( 6a à 6h ) de données et d'affecter un horodatage ( 9 ) à chaque bloc ( 6a à 6h ) de données, et
- le module ( 1 ) CPU est constitué pour accéder en lecture au jeu de données ayant un numéro (8) de données prévu à l'avance et une longueur (10) de jeu de données, qui représente le nombre des blocs ( 6a à 6h ) de données à lire.

4. Appareil d'automatisation suivant la revendication 3, **caractérisé en ce que** le module ( 1 ) CPU a un module ( 13 ) de logiciel pour procurer une interface avec un appareil de commande et de contrôle.
